Europäisches Patentamt

European Patent Office

Office européen des brevets

(11) Veröffentlichungsnummer: **0 192 843 B1**

## EUROPÄISCHE PATENTSCHRIFT

(45) Veröffentlichungstag der Patentschrift: 31.07.91

(51) Int. Cl.⁵: **B41J 5/12**, B23K 26/08

(21) Anmeldenummer: 85115895.6

(22) Anmeldetag: 13.12.85

(54) **Verfahren zum Herstellen einer Beschriftung auf aus sich bei Einwirkung einer Laserstrahlung verfärbendem Kunststoff bestehenden Tastenknöpfen für Schreib-oder Büromaschinen.**

(30) Priorität: 26.01.85 DE 3502678

(43) Veröffentlichungstag der Anmeldung:
03.09.86 Patentblatt 86/36

(45) Bekanntmachung des Hinweises auf die
Patenterteilung:
31.07.91 Patentblatt 91/31

(84) Benannte Vertragsstaaten:
AT CH DE FR GB IT LI NL SE

(56) Entgegenhaltungen:
FR-A- 2 196 607
FR-A- 2 236 666
US-A- 4 307 047

IBM TECHNICAL DISCLOSURE BULLETIN,
Band 21, Nr. 3, Augustus 1978, pages
1280-1281, New York, US; M. ANSCHEL et al.:
"Keyboard personalization"

PATENT ABSTRACTS OF JAPAN, Band 8, Nr.
148 (M-308)[1585], 11. Juli 1984; JP-A-59 45
091 (TOKYO SHIBAURA DENKI K.K.)
13.03.1984

(73) Patentinhaber: AEG Olympia Office GmbH
Postfach 960
W-2940 Wilhelmshaven(DE)

(72) Erfinder: Lewandowski, Dieter
Goethestrasse 6
W-2940 Wilhelmshaven(DE)
Erfinder: Ostermoor, Rolf
Freiligrathstrasse 170
W-2940 Wilhelmshaven(DE)
Erfinder: Spranger, Dieter
Kölner Strasse 6
W-2948 Schortens 2(DE)

## Beschreibung

Die Erfindung betrifft ein im Oberbegriff des Patentanspruchs 1 angegebenes Verfahren zur Herstellung einer Beschriftung auf aus sich bei Einwirkung einer Laserstrahlung verfärbendem Kunststoff bestehenden Tastenknöpfen für Schreib- oder Büromaschinen.

Die Verwendung von Energiestrahlung, insbesondere von Laserstrahlung, zur Beschriftung verschiedenartiger Materialien ist bereits seit längerem bekannt. Neben Einbrennverfahren, bei denen der Energiestrahl ein Schmelzen der Oberfläche z. B. metallischer Werkstoffe entsprechend der vom Strahl aufgezeichneten Konturen bewirkt oder bei denen der Energiestrahl eine auf das jeweils zu beschriftende Teil aufgebrachte Beschichtung verändert, ist es auch z.B. aus der US-PS 4,307 ,047 bekannt, die zu beschriftenden Teile aus einem Kunststoff herzustellen, der sich bei Einwirkung der Energiestrahlung in deren Einwirkungsbereich farblich verändert. Als Beispiel wird in der genannten Patentschrift das Beschriften von Kunststoff-Gerätetasten angeführt, die als gleichartige Kunststoffteile durch Spritzgießen in einem einheitlichen Werkzeug hergestellt werden, und danach ihre Beschriftung durch Energiestrahlung erhalten.

Dieses Verfahren hat gegenüber einer Tastenherstellung, bei der die Tasten zweifarbig mit Zeichen und Symbolen versehen gespritzt werden, den Vorteil, daß Lagerhaltung und Werkzeugkosten reduziert werden. Ein die Kosten negativ beeinflussender Faktor ist aber noch immer dadurch gegeben, daß jede einzelne unbeschriftete Taste dem Lager wieder entnommen, dem Beschriftungsgerät zugeführt und nach dem Beschriften für den zeichen- und symbolmäßig geordneten Einbau in irgendwelchen Geräten zwischengelagert werden muß. Dieses ist für eine Fertigung von kompletten Büromaschinentastaturen mit 40 bis 50 einzelnen Tastenknöpfen noch zu zeitraubend und daher zu kostenaufwendig.

Weiterhin ist in IBM Technical Disclosure Bulletin Vol. 21, No. 3, August 1978, Seiten 1280 bis 1281 eine Beschriftung von Tastenknöpfen bekannt, wobei die unbeschrifteten Tastenknöpfe bereits zu einer Tastatur zusammengefügt sind. Das Aufbringen der Zeichen und Symbole auf die Tastenknöpfe erfolgt durch einen Tintenspritzkopf, der dabei von Tastenknopf zu Tastenknopf und dann von Rasterpunkt zu Rasterpunkt verschoben werden muß. Dieses bekannte Beschriftungsverfahren erfordert viele Arbeitsgänge wie Reinigen der Oberflächen der Tasten, Spritzen der Zeichen, Trocknen der aufgespritzten Zeichen und Erzeugen eines abriebfesten Überzuges, welche die automatische Fertigung kompletter Tastaturen ebenfalls verkomplizieren und verteuern.

Der Erfindung liegt die Aufgabe zugrunde, ein Verfahren anzugeben, durch das die Beschriftung von Tastenknöpfen von Büromaschinentastaturen weiter rationalisiert wird.

Diese Aufgabe wird erfindungsgemäß durch die im Kennzeichen des Patentanspruchs 1 angegebenen Merkmale gelöst.

Die Vorteile der Erfindung bestehen insbesondere darin, daß ganze Büromaschinentastaturen - die sogar in kompletten Büromaschinen eingebaut sein können - vollständig mit unbeschrifteten Tastenknöpfen ausgestattet werden können, so daß auch während des Bestückungsvorganges keine Rücksicht auf irgendwelche Zuordnungen bestimmter Tastenknöpfe zu bestimmten Tasten genommen zu werden braucht. Hierdurch wird nicht nur, wie aus dem Stand der Technik bereits bekannt, die Lagerhaltung für die gleichartigen Kunststoffteile vereinfacht, es entfallen weiterhin auch noch die Arbeitsgänge der Entnahme einzelner Tasten zwecks Beschriftung, der sortierten Zwischenlagerung beschrifteter Tasten und der selektiven Bestückung der Tastaturen. Die Tastaturen werden vor der Beschriftung der Tastenknöpfe mit neutralen Tastenknöpfen bestückt, so daß der Werkzeugaufwand sehr gering ist.

Weiterhin ermöglich die Erfindung durch einfache Programmänderungen mittels eines Dateneingabegerätes die Belegung verschiedener Tastaturen mit unterschiedlichen Zeichen oder Symbolen. Dadurch kann ohne größere Unterbrechungen oder Umrüstzeiten während des Beschriftungsprozesses mehrerer Tastaturen auf verschiedene Tastaturbelegungen umgeschaltet werden, so daß eine Vereinfachung auch in der Steuerung des Fertigungsablaufes erreicht wird.

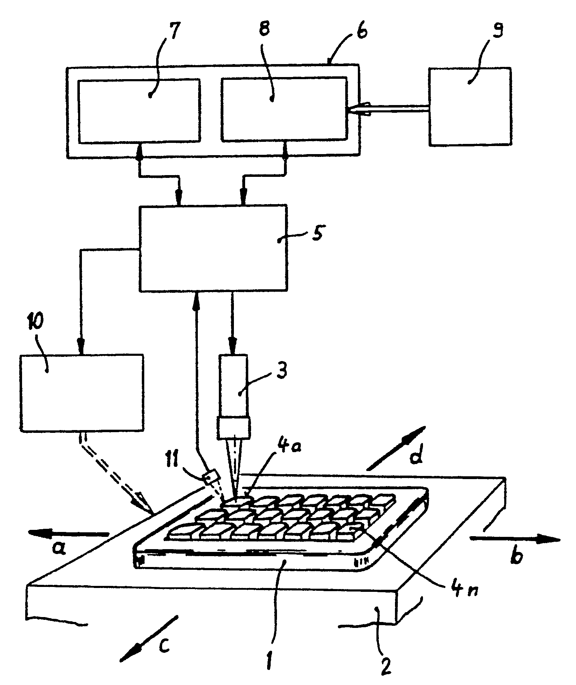

Ein Ausführungsbeispiel der Erfindung wird nachfolgend unter Bezugnahme auf die Figur erläutert. Die Prinzipdarstellung zeigt eine auf einem Wagen 2 angeordnete Tastatur 1, der in zwei durch Pfeile a, b; c, d bezeichnete Koordinatenrichtungen unter einem Aufzeichnungskopf 3 verschoben werden kann. Die Tastatur 1 ist komplett in Reihen und Spalten mit Tasten bestückt, die jeweils einen - in der Figur sichtbaren - Tastenknopf 4a bis 4n aufweisen.

Die Tastenknöpfe 4a bis 4n sind aus einem Kunststoff hergestellt, der sich im Einwirkungsbereich einer Energiestrahlung verfärbt, und weisen keinerlei Beschriftung auf. Der Kunststoff der Tastenknöpfe kann zweckmäßigerweise von grauer Farbe sein und sich bei Einwirkung der Energiestrahlung schwarz verfärben. Solche Kunststoffe sind seit längerem bekannt und z. B. in der GB-PS 835 120 oder der DE-PS 30 44 722 beschrieben.

Der Aufzeichnungskopf 3 beinhaltet eine Energiestrahlungsquelle, die einen Laserstrahl erzeugt. Eine ansich bekannte Ablenkeinrichtung im Aufzeichungskopf 3 erlaubt es, den Laserstrahl innerhalb eines begrenzten Bereiches auszulenken, so daß bei entsprechender Steuerung alpha/numerische Zeichen oder beliebige andere Symbole aufgezeichnet werden können.

Zur Steuerung der Einrichtung ist eine z. B. einen Mikroprozessor aufweisende Steuereinheit 5 vorgesehen, die mit einem Speicher 6 zusammenwirkt. Der Speicher 6 beinhaltet einen Programmspeicher 7 und einen Datenspeicher 8. Der Datenspeicher 8 ist mittels eines Dateneingabegerätes 9, z. B. einem Lesegerät für magnetische Aufzeichnungsträger, einem Lochstreifenleser, einer Tastatur, mit Eingabedaten ladbar.

Der Programmspeicher 7 enthält die für den Betrieb der Steuereinheit 5 erforderlichen Programmroutinen und darüberhinaus einen Zeichengenerator. Soll vom Laserstrahl des Aufzeichnungskopfes 3 ein Zeichen aufgezeichnet, der Strahl also entsprechend der Zeichenform abgelenkt werden, so werden von der Steuereinheit 5 aus dem Zeichengenerator des Programmspeichers 7 die zu diesem Zeichen gehörenden, für die Steuerung der Ablenkung benötigten Daten ausgelesen und zur Ansteuerung des Aufzeichnungskopfes 3 verwendet.

Die für die Verschiebung des Wagens 2 benötigten Motoren und anderen Elemente sind in der Figur als Wagenantrieb 10 in einem Block symbolisch zusammengefaßt. Die Steuereinheit 5 liefert dem Wagenantrieb 10 die nötigen Steuersignale, um einen von Tastenknopf zu Tastenknopf 4a bis 4n fortschreitenden Vorschub sicherzustellen. Ein Positionsabtaster 11, der z. B. von einer ansich bekannten photooptischen Einrichtung gebildet wird, erkennt, wenn ein Tastenknopf im Einwirkungsbereich des Aufzeichnungskopfes 3 an definierter Position steht, und gibt ein Rückmeldesignal an die Steuereinheit 5, die daraufhin den Aufzeichnungskopf für die Aufzeichnung des zugehörigen Zeichens oder Symbole ansteuert.

Die über das Dateneingabegerät 9 in den Datenspeicher 8 eingegebenen Daten geben die Belegung der Tastatur mit den verschiedenen Zeichen und Symbolen an, d. h. die Steuereinheit 5 kann bei Abfrage des Datenspeichers 8 entnehmen, welches Zeichen oder Symbol bei Weiterbewegung der Tastatur 1 in vorgegebener Richtung auf den jeweils nächstfolgend in den Einwirkungsbereich des Aufzeichnungskopfes 3 gelangenden Tastenknopf aufzuzeichnen ist. Die Steuereinheit 5 wird dann anhand dieser dem Datenspeicher 8 entnommenen Angabe die zugehörigen Steuerdaten aus dem Zeichengenerator im Programmspeicher 7 auslesen und, sobald vom Positionsabtaster 11 das Rückmeldesignal über die Einnahme der Aufzeichnungsposition vorliegt, den Aufzeichnungskopf 3 in entsprechender Weise ansteuern. Sobald dieser Aufzeichnungsvorgang beendet ist, veranlaßt die Steuereinheit 5 den Wagenantrieb 10, den Wagen 2 und damit die Tastatur 1 zur nächsten Taste zu verschieben, entnimmt dem Datenspeicher 8 die Information (Auswahldaten) über das nächste aufzuzeichnende Zeichen oder Symbol, entnimmt dem Zeichengenerator im Programmspeicher 7 die Daten für die Ansteuerung des Aufzeichnungskopfes 3 entsprechend dem aufzuzeichnenden Zeichen oder Symbol usw.

Eine Verschiebung der auf dem Wagen 2 angeordneten Tastatur 1 kann sowohl in Längsrichtung (Pfeile a, b) als auch in Querrichtung (Pfeile c, d) erfolgen, je nachdem die Tastenknöpfe der Tastatur 1 in nur einer oder in mehreren parallelen Reihen angeordnet sind. Bei einer Anordnung der Tastenknöpfe 4a bis 4n in mehreren Spalten und mehreren parallelen Reihen - wie in der Figur dargestellt -,kann die Verschiebung der Tastatur 1 beispielsweise erst in Richtung des Pfeiles a erfolgen, bis die Tastenknöpfe einer Reihe beschriftet sind. Dann würde eine Verschiebung der Tastatur 1 in Richtung des Pfeiles d erfolgen, bis der Aufzeichnungskopf 3 über der zweiten Tastenknopf-Reihe steht, woraufhin die Tastatur 1 in Richtung des Pfeiles b bewegt werden würde. Eine abermalige Verschiebung der Tastatur 1 in Richtung des Pfeiles d würde dann die dritte Tastenknopf-Reihe in den Einwirkungsbereich des Aufzeichnungskopfes 3 bringen, so daß bei einer nachfolgenden Verschiebung in Richtung des Pfeiles a auch die dritte in der Figur dargestellte Tastenknopf-Reihe beschriftet werden könnte. Anschließend würde dann der Wagen 2 in Richtung der Pfeile c und b bis in seine Ausgangsstellung zurückverschoben werden. Die jeweilige schrittweise Verschiebung des Wagens 2 und damit der Tastatur 1 wird vom Wagenantrieb 10 jeweils nach Anweisung der Steuereinheit 5 durchgeführt.

Sofern die Auslenkung des Laserstrahls des Aufzeichnungskopfes 3 eine größere Fläche als die nur eines Tastenknopfes zu überstreichen vermag, kann die Steuerung auch so erfolgen, daß jeweils mehrere im Einwirkungsbereich des Aufzeichnungskopfes 3 liegende Tastenknöpfe beschriftet werden, bevor eine Verschiebung des Wagens 2 und der Tastatur 1 erfolgt. Da weiterhin der Aufzeichnungsvorgang eines jeden Zeichens oder Symbols mit hoher Geschwindigkeit erfolgt, ist es auch nicht unbedingt erforderlich, daß Wagen 2 und Tastatur 1 schrittweise verschoben werden. Eine einwandfreie Beschriftung kann vielmehr auch bei kontinuierlicher Verschiebung der Tastatur 1 durchgeführt werden. Hierzu ist es lediglich erforderlich, daß die Ansteuerung des Aufzeichnungskopfes 3 derart synchron mit der Verschiebung der Tastatur 1 erfolgt, daß die Zeichen oder Symbole an der jeweils vorgesehenen Stelle aufgezeichnet werden. Diese Synchronisation kann, wie bereits beschrieben, durch Rückmeldung des Positionsabtasters 11 kontrolliert und eingehalten werden, jedoch ist es ebenfalls möglich, die jeweils zu beschriftende Tastatur 1 in einer definierten Lage auf dem Wagen 2 anzuordnen und die Ansteuerung des Aufzeichnungskopfes 3 sowie den Wagenantrieb in genau aufeinander abgestimmtem zeitlichen Verhältnis durchzuführen. Der Einsatz eines Positionsabtasters wäre dann nicht erforderlich.

Im beschriebenen Ausführungsbeispiel ist vorgesehen, im Speicher 6 bzw. Programmspeicher 7 einen Zeichengenerator vorzusehen. Es ist aber ebenso möglich, die für die zeichen- bzw. symbolgerechte Ablenkung des Energiestrahls erforderlichen Informationen unmittelbar mittels des Dateneingabegerätes 9 in den Datenspeicher 8 einzulesen, so daß die Steuereinheit 5 durch Zugriff auf den Datenspeicher 8 alle für die Ansteuerung des Aufzeichnungskopfes 3 benötigten Informationen direkt erhält. Bei einer solchen Ausführungsform wäre es nicht erforderlich, einen Zeichengenerator vorzusehen. In einer anderen Variante könnten auch die Daten und Informationen für verschiedenartige Zeichen-Belegungen unterschiedlicher Tastaturen im Speicher 6 enthalten sein, so daß mittels einer einfachen Selektionsmöglichkeit, beispielsweise eines Auswahlschalters, ein Daten- bzw. Informationssatz für jeweils eine gewünschte Tasturbelegung ausgewählt und für den Zugriff durch die Steuereinheit 5 freigegeben werden kann.

Es soll auch noch darauf hingewiesen werden, daß eine durch das erfindungsgemäße Verfahren zu beschriftende, vollständig mit Tasten und Tastenknöpfen bestückte Tastatur selbstverständlich auch bereits vor dem Beschriften in einer kompletten Maschine, z. B. einer Schreib- oder Rechenmaschine eingebaut sein kann. Für den Ablauf des Verfahrens ist es unerheblich, ob die in den Einwirkungsbereich der Energiestrahlungen zu bringende Tastatur in einem eigenen Gehäuse oder im Gehäuse einer Maschine angeordnet ist.

**Patentansprüche**

1. Verfahren zur Herstellung einer Beschriftung auf Tastenknöpfen (4a bis 4n) für Schreib- oder Büromaschinen, wobei die aus bei Einwirkung einer Laserstrahlung verfärbenden Kunststoffen bestehenden Tastenknöpfe durch einen Aufzeichnungskopf beaufschlagbar sind, welcher eine der Form der auf die Tastenknöpfe aufzubringenden Zeichen entsprechend ablenkbaren Laserstrahl erzeugende Energiestrahlungsquelle aufweist, wobei die Steuerdaten für die Ablenkung des Laserstrahles einem Speicher entnehmbar sind, **gekennzeichnet durch** folgende Schritte:

a) eine mit in Reihen und Spalten angeordneten unbeschrifteten Tastenknöpfen (4a-4n) vollständig bestückte Tastatur (1) wird auf einem Wagen (2) positioniert,

b) danach wird der Wagen (2) mit der darauf positionierten Tastatur (1) mittels eines motorischen Wagenantriebes (10) relativ zu dem Aufzeichnungskopf (3) in eine Ausgangspositionsstellung geschoben, wobei ein aus einer photooptischen Einrichtung bestehenden Positionsabtaster (11) erkennt, wenn die Tastenknöpfe (4a-4n) im Einwirkungsbereich des Aufzeichnungskopfes (3) an definierter Position stehen,

c) der Positionsabtaster (11) gibt ein Rückmeldesignal an eine als Mikroprozessor ausgebildete Steuereinheit (5), die dann aus einem einen Datenspeicher (8) und einen Programmspeicher (7) mit Programmroutinen und mit dem einen Zeichengenerator aufweisenden Speicher (6) eines Dateneingabegerätes (9) Steuerdaten zur Ablenkung des Laserstrahles und zur Ansteuerung des Aufzeichnungskopfes (3) für alle auf den Tastenknöpfen (4a-4n) aufzubringenden Zeichen oder Symbole abruft und die dann mit Auswahldaten für eine Aufeinanderfolge von Steuerdaten der Zeichen und Symbole einer zu beschriftenden Tastatur (1) entsprechend den nacheinander aufgesuchten Beschriftungspositionen in einem in dem Speicher (6) vorhandenen Datenspeicher (8) geladen werden und

d) dann werden nach Erreichen jeder neuen Beschriftungsposition die dieser Position zugeordneten Zeichen oder Symbole von dem Laserstrahl des Aufzeichnungskopfes (3) nach Maßgabe der entsprechenden dem Datenspeicher (8) entnommenen Steuerdaten in den Tastenknöpfen (4a-4n) durch Verfärbung des Kunststoffes sichtbar gemacht,

e) wobei der Laserstrahl mittels einer Ablenkeinheit in dem Aufzeichnungskopf (3) jeweils mehrere Tastenknöpfe (4a-4n) aus einer Positionsstellung innerhalb eines begrenzten Bereiches überstreicht, derart, daß jeweils mehrere im Einwirkungsbereich des Aufzeichnungskopfes (3) liegende Tastenknöpfe (4a-4n) beschriftet werden, bevor eine Verschiebung des Wagens (2) und damit der Tastatur (1) erfolgt.

2. Anwendung des Laserstrahlverfahrens zur Beschriftung auf sich bei Einwirkung einer Energiestrahlung verfärbenden Kunststoff bestehenden Tastenknöpfen in vollständig bestückten Schreib- oder Büromaschinentastaturen, welche in komplett montierten Schreib- oder Rechenmaschinen eingebaut sind.

## Claims

1. A method of producing an inscription on key buttons (4a to 4n) for typewriters or office machines, in which the key buttons which comprise plastics which become coloured under the action of a laser beam may be acted upon by a drawing head which has a source of energy radiation which produces a laser beam which can be deflected according to the shape of the characters to be applied to the key buttons, in which the control data for the deflection of the laser beam may be taken from a memory, **characterised by** the following steps:

a) a keyboard (1) fully equipped with uninscribed key buttons (4a-4n) which are arranged in rows and columns is positioned on a carriage (2),

b) then the carriage (2) with the keyboard (1) positioned thereon is moved into a starting position with the aid of a motorised carriage drive (10) relative to the drawing head (3), in which a position scanner (11) which consists of a photo optical device recognises when the key buttons (4a-4n) are in the range of action of the drawing head (3) at a defined position,

c) the position scanner (11) passes a callback signal to a control unit (5) formed as a microprocessor which then calls up control data for deflecting the laser beam and for driving the drawing head (3) for all of the characters or symbols which are to be applied to the key buttons (4a-4n) out of a memory (6) of a data input apparatus (9), which has a data store (8) and a program store (7) with program routines and with a character generator, and which then are loaded in a data store (8) present in the memory (6) with selection data for a sequence of control data of the characters and symbols of a keyboard (1) which is to be inscribed in accordance with the successively sought inscription positions and

d) then after achieving each new inscription position the characters or symbols associated with this position are made visible by the laser beam of the drawing head (3), according to the appropriate control data taken from the data store (8), in the key buttons (4a-4n) by colouring the plastics,

e) in which the laser beam passes across several key buttons (4a-4n) respectively, out of one position within a limited area with the aid of a deflection unit in the drawing head (3), such that in each case several key buttons (4a-4n) are inscribed, these buttons lying in the range of action of the drawing head (3), before the carriage (2) and thus the keyboard (1) are displaced.

2. Application of the laser beam method of inscribing on key buttons consisting of a plastics which becomes coloured under the action of an energy beam in fully equipped typewriter or office machine keyboards mounted in completely assembled typewriters or computers.

## Revendications

1. Procédé de réalisation d'une inscription sur des têtes de touche (4a à 4n) pour des machines à écrire ou des machines de bureau, procédé dans lequel les têtes de touche, constituées de matières plastiques, se colorant lors de l'intervention d'un rayonnement laser, peuvent être influencées par une tête à tracer qui présente une source de rayonnement énergétique produisant un faisceau laser que l'on peut faire dévier en fonction de la forme des caractères à tracer sur les têtes de touche, étant précisé que les données de commande pour la déviation du faisceau laser peuvent être prélevées dans une mémoire, procédé caractérisé par les étapes suivantes :

a) on positionne sur un chariot (2) un clavier (1) entièrement garni de têtes de touche (4a-4n), ne comportant pas d'inscription et disposées en rangées et en colonnes,

b) ensuite, on fait coulisser le chariot (2), avec le clavier (1) qui y est placé, au moyen d'un mécanisme motorisé (10) d'entraînement du chariot, par rapport à la tête (3) à tracer, pour amener le chariot à une position de départ, étant précisé qu'un détecteur (11) de position constitué d'un dispositif photo-optique, reconnaît si les têtes de touche (4a-4n) se trouvent à une position définie dans la zone d'intervention de la tête (3) à tracer,

c) le détecteur (11) de position envoie un signal de rétrosignalisation à une unité (5) de commande qui est conçue sous forme d'un microprocesseur et qui, dans une mémoire (6), qui comporte une mémoire (8) des données et une mémoire (7) des programmes contenant des routines de programme et le générateur de caractères, d'un appareil (9) d'entrée des données, appelle des données de commande pour la déviation des faisceaux laser et pour la commande de la tête (3) à tracer pour tous les caractères ou symboles qui sont à tracer sur les têtes de touche (4a-4n), données qui sont alors chargées, avec des données de sélection pour une succession de données de commande des caractères et des symboles d'un clavier (1) qui doit recevoir les inscriptions, en fonction des positions d'inscription successivement cherchées, dans une mémoire (8) des données qui se trouve dans la mémoire (6) et

d) alors, après avoir atteint chaque nouvelle position d'inscription, les caractères ou les symboles correspondant à cette position sont rendus visibles sur les têtes de touche (4a-4n) par coloration de la matière plastique, selon les données de commande correspondantes prélevées dans la mémoire (8) des données,

e) étant précisé que le faisceau laser, au moyen d'une unité de déviation prévue dans la tête (3) à tracer, balaie chaque fois plusieurs têtes de touche (4a-4n) à partir d'une position située à l'intérieur d'une zone limitée, de façon telle que plusieurs têtes de touche (4a-4n), situées dans la zone d'intervention de la tête (3) à tracer, reçoivent une inscription avant que se fasse un coulissement du chariot (2) et donc du clavier (1).

2. Application du procédé par faisceau laser pour effectuer une inscription sur des têtes de touche, constituées d'une matière plastique qui se colore lors de l'intervention d'un rayonnement énergétique, dans des claviers de machines à écrire ou de machines de bureau complètement garnis et installés dans des machines à écrire ou des machines à calculer complètement assemblées.